# EUROPEAN PATENT APPLICATION

(11) **EP 4 653 087 A1**
(43) Date of publication of application: **26.11.2025**
(21) Application number: 25171653.6
(22) Date of filing: 22.04.2025
(51) Int. Cl.: B01J 21/06, B01J 21/08, B01J 21/12, B01J 23/06, B01J 23/14, B01J 23/745, C08G 65/26, C08G 63/42, C08G 63/672, C08G 63/83, C08G 63/84, C08G 63/85, C08G 63/87

(54) **A COMPOSITE CATALYST FOR CATALYZING POLYMERIZATION OF CYCLIC ETHERS, A PREPARATION METHOD AND A USE THEREOF**

(30) Priority: 14.05.2024 CN 202410592837
(71) Applicant: Shanghai DiYang Chemical Technology Co., Ltd., Shanghai 200135 (CN)
(72) Inventor: Zhang, Qiuming, Pudong New District, Shanghai, 200135 (CN); Zhao, Yang, Pudong New District, Shanghai, 200135 (CN)
(74) Representative: Grünecker Patent- und Rechtsanwälte PartG mbB

(57) **Abstract**

The present disclosure relates to the field of catalyst preparation, and more particularly to a composite catalyst for catalyzing polymerization of cyclic ethers, a preparation method and a use thereof. The method comprises the following steps: (1) dissolving a metal salt in a solvent, stirring evenly to obtain a first component; (2) adding a silicon source to the first component, reacting the silicon source and the metal salt, and standing; (3) removing the solvent, drying, to obtain a dried powder; (4) calcining the dried powder to obtain the composite catalyst. The composite catalyst prepared by the present disclosure has suitable acidity, and has acid sites of Lewis acid and Bronsted acid at the same time. The composite catalyst of the present disclosure can show suitable acidity through the combination of two acid sites, thereby achieving higher conversion rate and narrower molecular weight distribution in the ring-opening polymerization reaction of cyclic ethers.

## Description

### Technical Field

The present disclosure relates to the field of catalyst preparation, and more particularly to a composite catalyst for catalyzing polymerization of cyclic ethers, a preparation method and a use thereof.

### Background

Cyclic ether compounds have the characteristics of easy polymerization, rich structure and functional groups, wide range of sources and renewable. They are excellent monomers for synthesizing heterochain polymer materials. Using 3-8-membered rings such as ethylene oxide, propylene oxide, and tetrahydrofuran as monomers, various types of polymer materials can be obtained through ring-opening polymerization and copolymerization. Cyclic ether compounds can also be copolymerized with homologous cyclic ether monomers to obtain polymers with richer side group compositions. For example, cyclic ether compounds can undergo random, alternating, block and other copolymerization reactions with many non-epoxy compounds such as cyclic esters, cyclic anhydrides, carbon dioxide and its derivatives to produce polymers whose main chain structures are significantly different from those of the side chains. With the development of industry and society, the functions and quality of various polymer materials have become more refined. Catalysts and process control are of great significance for accurately regulating and controlling the structure and properties of cyclic ether polymers. The catalytic polymerization of cyclic ether compounds is mainly divided into several catalytic systems such as ionic, protic acid, and Lewis acid types. Specific catalysts form complexes and ion pairs with initiators, thereby initiating the ring-opening polymerization of cyclic ethers.

Different catalysts can adjust the polymerization reaction rate, molecular weight distribution, and the ratio and connection mode of the repeating blocks in the copolymerization product, thereby synthesizing cyclic ether polymer materials that meet different needs. The catalysts currently used for catalyzing polymerization of cyclic ether compounds have some problems, such as high corrosiveness, strict equipment requirements, and high color number of the product. Therefore, it is necessary to develop a new catalytic system.

The catalytic system of cyclic ether compounds can be divided into catalytic systems such as cationic ring-opening polymerization, anionic ring-opening polymerization and coordination ring-opening polymerization. Catalysts for cationic ring-opening polymerization mainly comprise proton acids and Lewis acids. Alkali metal hydroxides and alkoxides can be used to catalyze anionic ring-opening polymerization of cyclic ether compounds. The commonly used catalysts comprise potassium hydroxide, sodium hydroxide, potassium alkoxide and sodium alkoxide.

In the prior art, acidic catalysts such as Lewis acid and fluorosulfonic acid are used to synthesize cyclic ether polymer materials. For example, in US5180856A, boron trifluoride catalyst is used to catalyze polymerization of tetrahydrofuran with glycerol ether in the presence of chain-alkanol. US4481123A discloses a method for polymerization of α-epoxides with alkyl groups containing 8-26 carbon atoms using a Lewis acid catalyst.

However, the acidic catalysts for catalyzing the polymerization of cyclic ether compounds in the prior art have the following problems: (1) the catalysts are extremely corrosive and have strict requirements on equipment; (2) the acidity of the catalysts is unreasonable, resulting in the produced polymer with a high color number and a wide molecular weight distribution; (3) the activity of the catalysts is relatively low, resulting in low conversion rates of polymerization or complex processing procedures during the preparation process. With the increasing demand for quality and molecular weight distribution of product from downstream customers of polyether, especially in the fields of high-end fabrics, medical care, etc., there is an urgent need to develop new catalytic systems in this field to solve these problems.

### Summary

The purpose of the present disclosure is to provide a novel composite catalyst for catalyzing polymerization of cyclic ethers, a preparation method and a use thereof. A functional silicon source and a first component comprising a suitable metal salt are selected, followed by appropriate steps of dissolving, stirring, isothermal reacting, drying and calcining to obtain the composite catalyst of the present disclosure. The composite catalyst of the present disclosure has suitable acidity, and has acid sites of Lewis acid and Bronsted acid at the same time. The composite catalyst of the present disclosure can exhibit special performance in catalyzing ring-opening polymerization reaction of cyclic ethers by the combination of the two acid sites.

A first aspect of the present disclosure provides a preparation method for a composite catalyst, comprising the steps of:
(1) dissolving a metal salt in a solvent, stirring evenly to obtain a first component;
(2) adding a silicon source to the first component, reacting the silicon source and the metal salt, and standing;
(3) removing the solvent and drying to obtain a dried powder;
(4) calcining the dried powder to obtain the composite catalyst;
a metal element in the metal salt is selected from one or more of Al, Zn, Sn, Fe, Ti, Zr and Hf.

In one or more embodiments, an anion in the metal salt is selected from one or more of a halide ion, a nitrate ion, a sulfate ion, an oxide ion, a carboxylate ion and an alkoxide ion.

In one or more embodiments, the metal element in the metal salt is selected from one or more of Al, Ti and Zr.

In one or more embodiments, the anion in the metal salt is selected from one or more of a chloride ion, an oxide ion, and a nitrate ion.

In one or more embodiments, the silicon source is selected from one or more of tetraethyl orthosilicate, tetramethyl orthosilicate, polysilane and tetrachlorosilane.

In one or more embodiments, in step (1), the solvent is an organic solvent and/or water, and the organic solvent is preferably an alcohol solvent, such as a monohydric alcohol containing 1-4 carbon atoms.

In one or more embodiments, in step (1), the solvent is an alcohol solvent and/or water.

In one or more embodiments, the solvent is a mixed solvent of an alcohol solvent and water, and a volume ratio of the alcohol solvent to water is preferably (3-5): 1 in the mixed solvent.

In one or more embodiments, the metal element in the metal salt is selected from one or more of Al, Ti and Zr, and the anion in the metal salt is selected from one or more of a chloride ion, an oxide ion, and a nitrate ion.

In one or more embodiments, the metal salt is selected from one or more of zirconium oxynitrate, titanium tetrachloride and aluminum nitrate.

In one or more embodiments, in step (2), a reaction is carried out for 4-48 hours, preferably for 4-24 hours.

In one or more embodiments, a reaction is carried out at 40-80°C, preferably 60-80°C.

In one or more embodiments, in step (2), a time of standing is 12-48 hours, preferably 24-30 hours.

In one or more embodiments, in step (2), a concentration of the metal salt in the solvent is 0.05-1 mol/L, preferably 0.1-0.5mol/L.

In one or more embodiments, in step (2), a concentration of the silicon source in the solvent is 0.2-4 mol/L, preferably 0.4-2mol/L.

In one or more embodiments, in step (2), a molar ratio of metal ions comprised in the metal salt to silicon atoms comprised in the silicon source is 1: (3-10), preferably 1: (3.5-5), for example 1: (4-5).

In one or more embodiments, in step (3), the solvent is removed by centrifugation or gas extraction method to obtain insoluble matter, and the insoluble matter is dried.

In one or more embodiments, in step (3), a temperature of drying is 30-200°C. In one or more embodiments, in step (3), a time of drying is 1-12 hours.

In one or more embodiments, in step (4), a temperature of calcining is 400-1500°C, preferably 600-1200°C.

In one or more embodiments, in step (4), a time of calcining is 1-12 hours.

In one or more embodiments, the method further comprises the step of: (5) extruding and granulating the composite catalyst.

A second aspect of the present disclosure provides a composite catalyst prepared by the method according to the first aspect of the present disclosure.

In one or more embodiments, a specific surface area of the composite catalyst is ≥250m²/g.

In one or more embodiments, an acidity of the composite catalyst is 0.02-0.2mmol/g.

In one or more embodiments, an acid amount on the surface of the composite catalyst is 0.40-0.70mg.

In one or more embodiments, a molar ratio of silicon element to the metal element is (3-10):1, preferably (3.5-5):1, for example 3.5:1-4.5:1, in the composite catalyst.

A third aspect of the present disclosure provides a use of the composite catalyst according to the second aspect of the present disclosure in catalyzing the ring-opening polymerization of a cyclic ether compound to produce a polyether polymer.

In one or more embodiments, the cyclic ether compound is an optionally substituted 3-8-membered cyclic ether compound.

The present disclosure has the following beneficial effects:
1. The composite catalyst prepared by the present disclosure has suitable acidity, and has acid sites of Lewis acid and Bronsted acid at the same time. The composite catalyst of the present disclosure can show suitable acidity through the combination of two acid sites, thereby achieving higher conversion rate and narrower molecular weight distribution in the ring-opening polymerization reaction of cyclic ethers. The conversion rate of the polymerization reaction catalyzed by the composite catalyst of the present disclosure can reach more than 45%, for example, more than 48%, more than 50%, more than 55%, more than 60%, more than 65%. The molecular weight distribution index of the resulting polymer can reach less than 2.3, for example, less than 2.25, less than 2.1, less than 2.0, less than 1.9, less than 1.8, less than 1.7.
2. The preparation method of the composite catalyst of the present disclosure is simple and does not require the use of an acidic medium. The catalyst can be obtained by reacting a first component comprising a metal salt with a functional silicon source in an organic solvent and then calcining. The catalyst of the present disclosure is noncorrosive, avoiding the problems of harsh requirements on equipment and complex processing procedures of using corrosive catalysts in the prior art.
3. The composite catalyst of the present disclosure can be used to catalyze the ring-opening polymerization of cyclic ether compounds to produce polyether polyesters or polyether polyols, and has a wide range of applications. Among them, suitable cyclic ether compounds comprise ethylene oxide, propylene oxide, THF, hexamethylene oxide, and derivatives of the above cyclic ethers with side chains or substituents. The number-average molecular weight of the obtained polyether polyester or polyether polyol product ranges from 50 to 10000.
4. The composite catalyst of the present disclosure can catalyze reaction at a relatively low temperature, which is beneficial to reducing energy consumption and environmental pollution.
5. When the composite catalyst of the present disclosure is used to catalyze the ring-opening polymerization of cyclic ethers, the reaction system can reach equilibrium in a short time. After the reaction reaches equilibrium, the reaction solution can still maintain a lower color number after a long reaction time, thereby making the obtained polyether polyester or polyether polyol product have a lower color number.

In summary, compared to the prior art, the ring-opening polymerization reaction of the cyclic ether catalyzed by the composite catalyst of the present disclosure has a higher conversion rate, and the resulting polymer product has a narrower molecular weight distribution. The preparation method of the composite catalyst of the present disclosure is simple and the composite catalyst of the present disclosure has a wide range of applications. The use of the composite catalyst of the present disclosure in catalytic reactions has the advantages of low energy consumption and environmental pollution.

### Detailed Description

In order to enable those skilled in the art to understand the features and effects of the present disclosure, the following is a general description and definition of terms and words mentioned in the specification and claims. Unless otherwise specified, all technical and scientific terms used herein are intended to be the ordinary meaning of the knowledge of the present disclosure by those skilled in the art, and in case of a conflict, the definition of this specification shall prevail.

The theories or mechanisms described and disclosed herein, whether right or wrong, should not limit the scope of the present disclosure in any way, that is to say the present disclosure can be practiced without limitation to any particular theory or mechanism.

As used herein, the terms "comprising", "including", "containing" and the like encompass terms "consisting essentially of" and "consisting of". For example, where it is disclosed herein that "A comprises B and C", "A consists essentially of B and C" and "A consists of B and C" should be considered to be disclosed herein.

In the present disclosure, all features, such as numerical values, quantities, amounts and concentrations, which are defined by numerical ranges or percentage ranges, are only for the sake of simplicity and convenience. Accordingly, the recitation of numerical ranges or percentage ranges shall be construed as covering and specifically disclosing all possible sub-ranges and individual values (including integers and fractions) in the range.

In the present disclosure, unless otherwise specified, a percentage refers to a mass percentage, and a ratio refers to a mass ratio.

In the present disclosure, when embodiments or Examples are described, it should be understood that they are not intended to limit the disclosure to these embodiments or Examples. On the contrary, all alternatives, improvements and equivalents of the methods and materials described in the present disclosure can be covered within the scope defined by the claims.

Herein, for the sake of brevity of description, all possible combinations of various technical features in the various embodiments or Examples are not described. Therefore, as long as there is no contradiction in the combination of these technical features, the various technical features in the various embodiments or Examples can be combined in any combination, and all possible combinations should be considered to be within the scope of this specification.

The present disclosure provides a preparation method for a composite catalyst, comprising the steps of:
(1) dissolving a metal salt in a solvent, stirring evenly to obtain a first component;
(2) adding a silicon source to the first component, reacting the silicon source and the metal salt, and standing;
(3) removing the solvent, drying to obtain a dried powder;
(4) calcining the dried powder to obtain the composite catalyst.

In step (1), a metal element in the metal salt may be selected from one or more of Al, Zn, Sn, Fe, Ti, Zr and Hf. In some embodiments, the metal element in the metal salt is selected from one or more of Al, Ti and Zr. An anion in the metal salt may be selected from one or more of a halide ion, a nitrate ion, a sulfate ion, an oxide ion, a carboxylate ion and an alkoxide ion. Herein, the halide ion comprises a fluoride ion, a chloride ion, a bromide ion, an iodide ion, preferably a chloride ion. Herein, the oxide ion refers to O²⁻. Herein, the carboxylate ion refers to anion formed by the loss of hydrogen from the carboxyl group of carboxylic acid molecules. The carboxylate ion can be a C1-C6 carboxylate ion, for example C1 carboxylate ion, C2 carboxylate ion, C3 carboxylate ion, C4 carboxylate ion, C5 carboxylate ion, C6 carboxylate ion. Herein, the carbon number preceding the ion or compound indicates the number of carbon atoms contained in the ion or compound. For example, C1 carboxylate ion indicates a carboxylate ion containing 1 carbon atom (i.e., formate ion). Herein, the alkoxide ion refers to an anion formed by the loss of hydrogen from the hydroxyl group of alcohol molecules. The alkoxide ion can be a C1-C6 alkoxide ion, such as C1 alkoxide ion, C2 alkoxide ion, C3 alkoxide ion, C4 alkoxide ion, C5 alkoxide ion, and C6 alkoxide ion. In some embodiments, the anion in the metal salt is selected from one or more of a chloride ion, an oxide ion, and a nitrate ion. In some embodiments, the metal salt is selected from one or more of a chloride, a nitrate, an oxynitrate, and an alkoxide. Herein, a nitrate refers to a metal salt whose anion is nitrate ion, an oxynitrate refers to a metal salt whose anions are nitrate ion and oxygen ion, and an alkoxide refers to a compound in which the hydrogen in the hydroxyl group of an alcohol molecule is replaced by one or more metals selected from Al, Zn, Sn, Fe, Ti, Zr and Hf. Herein, the alkoxide may be a salt formed by replacing the hydroxyl hydrogen of a C1-C6 alcohol (e.g., C1 alcohol, C2 alcohol, C3 alcohol, C4 alcohol, C5 alcohol, C6 alcohol) with the metal described herein, including but not limited to methoxide, ethoxide, propoxide, aluminum alkoxide, titanium alkoxide, and zirconium alkoxide. Preferably, the metal salt is selected from one or more of a chloride, a nitrate and an oxynitrate, such as zirconium oxynitrate, titanium tetrachloride, aluminum nitrate. The solvent may be an organic solvent and/or water. Preferably, the solvent is a mixed solvent of an organic solvent and water. The organic solvent may be an alcohol solvent, for example, a monohydric alcohol containing 1 to 4 carbon atoms, including but not limited to methanol, ethanol, propanol, and butanol. In some embodiments, the solvent is a mixed solvent of an alcohol solvent and water. In the mixed solvent, a volume ratio of the alcohol solvent to water can be (3-5): 1, for example 4:1.

In step (2), the silicon source may be selected from one or more of tetraethyl orthosilicate, tetramethyl orthosilicate, polysilane and tetrachlorosilane. Preferably, the silicon source is tetraethyl orthosilicate. The reaction may be carried out for 4-48 hours, for example, 8 hours, 12 hours, 18 hours, 24 hours, 30 hours, 36 hours, 40 hours. The reaction is preferably carried out for 4-24 hours. The reaction may be carried out at 40-80°C, for example, 40°C, 50°C, 60°C, 70°C, 80°C. The reaction is preferably carried out at 60-80°C. A time of standing may be 12-48 hours, for example, 12 hours, 18 hours, 24 hours, 30 hours, 36 hours, 40 hours. A time of standing is preferably 24-30 hours, 24-48 hours. After the reaction in step (2) produces a gel compound, stirring is stopped and the mixture is kept standing at a constant temperature, which is conducive to the structural stability of the gel compound.

A concentration of the metal salt in the solvent may be 0.05-1 mol/L, for example, 0.08 mol/L, 0.1 mol/L, 0.2 mol/L, 0.3 mol/L, 0.5 mol/L, 0.7 mol/L, 0.9 mol/L. The concentration of the metal salt in the solvent is preferably 0.1-0.5 mol/L. A concentration of the silicon source in the solvent may be 0.2-4 mol/L, for example, 0.4 mol/L, 0.6 mol/L, 0.8 mol/L, 1 mol/L, 1.5 mol/L, 2 mol/L, 2.5 mol/L, 3 mol/L, 3.5 mol/L. The concentration of the silicon source in the solvent is preferably 0.4-2 mol/L. A molar ratio of metal ions comprised in the metal salt to silicon atoms comprised in the silicon source can be 1: (3-10), for example, 1: 3, 1: 4, 1: 5, 1: 6, 1: 8. The molar ratio of metal ions comprised in the metal salt to silicon atoms comprised in the silicon source is preferably 1: (3.5-5), for example, 1: (4-5). The present disclosure finds that by controlling the molar ratio of metal ions to silicon atoms in the preparation process to 1: (3-10), the molecular weight distribution index of the cyclic ether polymerization product can be reduced while ensuring that the cyclic ether compound has a high conversion rate.

In step (3), the solvent is removed by centrifugation or gas extraction method to obtain insoluble matter, and the insoluble matter is dried. The gas extraction method is preferably carried out using an inert gas, such as nitrogen or argon. A temperature of drying may be 30-200°C, for example, 50°C, 60°C, 70°C, 80°C, 90°C, 100°C, 110°C, 120°C, 130°C, 150°C, 180°C. A time of drying may be 1-12 hours, for example, 2 hours, 3 hours, 5 hours, 8 hours, 10 hours.

In step (4), a temperature of calcining may be 400-1500°C, for example, 500°C, 600°C, 700°C, 800°C, 900°C, 1000°C, 1200°C, 1300°C. The temperature of calcining is preferably 600-1200°C. A time of calcining may be 1-12 hours, for example, 2 hours, 3 hours, 5 hours, 8 hours, 10 hours. Calcining may be carried out in an air atmosphere or under the protection of an inert gas (for example, nitrogen or argon).

The method of the present disclosure further comprises the step of: (5) extruding and granulating the composite catalyst. The prepared composite catalyst is shaped by extrusion and granulation. The shape can be cylindrical, strip-like, capsule-like, spherical or other special shapes.

The present disclosure provides a composite catalyst prepared by the method of the present disclosure. A specific surface area of the composite catalyst of the present disclosure is ≥250m²/g, for example, ≥260m²/g, ≥270m²/g, ≥280m²/g, ≥290m²/g, ≥300m²/g, ≥310m²/g, ≥320m²/g, ≥325m²/g. The specific surface area of the composite catalyst of the present disclosure is measured by the BET method. An acid amount on the surface of the composite catalyst is 0.40-0.70mg. The acid amount of the composite catalyst of the present disclosure can be measured by an ion exchange method. A suitable acidity of the composite catalyst is 0.02-0.2 mmol/g, for example 0.02 mmol/g, 0.04 mmol/g, 0.05 mmol/g, 0.06 mmol/g, 0.08 mmol/g, 0.1 mmol/g, 0.13 mmol/g, 0.15 mmol/g, 0.18 mmol/g. In some embodiments, the acidity of the composite catalyst is 0.02-0.05 mmol/g. The present disclosure finds that controlling the specific surface area, acidity and acid amount of the composite catalyst within the aforementioned range can achieve the effects of high conversion rate of cyclic ether polymerization and low molecular weight distribution index of the polymer product.

In the composite catalyst, a molar ratio of silicon to metal element is (3-10): 1, preferably (3.5-5): 1, for example 3.5: 1-4.5: 1. In some embodiments, in the composite catalyst, the molar ratio of silicon to metal is 4: 1.

The present disclosure provides a use of the composite catalyst of the present disclosure in catalyzing the ring-opening polymerization of a cyclic ether compound to produce a polyether polymer.

The cyclic ether compound is an optionally substituted 3-8-membered cyclic ether compound, for example, ethylene oxide, propylene oxide, tetrahydrofuran (THF), hexamethylene oxide.

As used herein, "optionally" or "optional" means that the event or condition described subsequently may or may not occur, and the description includes both cases where the event or condition occurs and does not occur. For example, "optionally substituted 3-8-membered cyclic ether compound" means that the cyclic ether compound may be substituted or unsubstituted, and the description includes both substituted cyclic ether compounds and unsubstituted cyclic ether compounds. The "optional" substituents described in the present disclosure are selected from alkyl, alkenyl, alkynyl, alkoxy, halogen, haloalkyl, haloalkenyl, haloalkynyl, cyano, carboxyl, hydroxyl, nitro, triphenylphosphine, azido, aldehyde, optionally substituted aryl, optionally substituted heteroaryl, optionally substituted cycloalkyl, and optionally substituted heterocyclic.

As used herein, the term "substituted", whether or not preceded by the term "optionally" (i.e., equivalent to substituted or unsubstituted), refers to the replacement of one or more hydrogens of a specified group or moiety by a "suitable substituent". Herein, the number of substituents may be one or more, i.e., 1, 2, 3, 4, 5, or 6 or more, depending on the substituted group and the nature of the substituent. For example, when the substituent of an ethyl group is a halogen, the group may be substituted by 1, 2, 3, 4, or 5 substituents, such as trifluoroethyl, pentafluoroethyl, etc., depending on the structure of the substituted group. In some embodiments, the number of the substituents is 1, 2, or 3. In some embodiments, the number of the substituents is 1 or 2. In some embodiments, the number of the substituents is 1. It will be understood that "substituted" or "substituted by..." includes implicit conditions, i.e., such substitutions are carried out according to the allowed valence of the substituted atom, and the substitution produces a stable or chemically feasible compound, such as a compound that does not spontaneously transform, such as by rearrangement, cyclization, elimination, etc. Unless otherwise indicated, an "optionally substituted" group may have a suitable substituent at each substitutable position of the group, and when more than one position in any given structure may be substituted by more than one substituent selected from a specified group, the substituent may be the same or different at each position. It will be understood by those skilled in the art that the substituent itself may be substituted if appropriate. Unless specifically indicated as "unsubstituted", chemical moieties referred to herein should be understood to include substituted variants. For example, reference to a "cyclic ether compound" or moiety implicitly includes unsubstituted cyclic ether compounds and substituted derivatives.

For the entire context of the present disclosure, the above-mentioned "suitable substituents" should be understood to include, but are not limited to, the alkyl, alkenyl, alkynyl, halogen, haloalkyl, haloalkenyl, haloalkynyl, alkoxy, cyano, hydroxy, amino, monoalkylamino, dialkylamino, nitro, aryl, heteroaryl, cycloalkyl (e.g., cycloalkyl, cycloalkenyl, etc.), carboxyl, triphenylphosphine, azido, aldehyde, heterocyclyl, etc. described herein; these groups as substituents, including alkyl, alkenyl, alkynyl, alkyl in haloalkyl, alkenyl in haloalkenyl, alkynyl in haloalkynyl, alkoxy, alkyl in monoalkylamino, alkyl in dialkylamino, aryl, heteroaryl, cycloalkyl and heterocyclyl themselves are also optionally substituted, for example, they may also be optionally substituted by one or more groups selected from alkyl, halogen, haloalkyl, alkoxy, hydroxy, amino, monoalkylamino, dialkylamino, nitro, carboxyl, triphenylphosphine, azido, aryl, heteroaryl, cycloalkyl and heterocyclyl.

In the present disclosure, the polyether polymer is a polymer polymerized primarily from a cyclic ether compound as monomer, wherein the mass of the cyclic ether compound can account for more than 80% of the total mass of monomer, such as more than 90%, more than 95%, more than 98%, more than 99%. In addition to the cyclic ether compound, the monomer of the polyether polymer may also comprise one or more selected from anhydrides, cyclic anhydrides, cyclic esters, carbon dioxide, polyols and polycarboxylic acids. In some embodiments, in addition to the cyclic ether compound, the monomer of polyether polymer may also comprise one or more selected from anhydrides, cyclic anhydrides, polyols and polycarboxylic acids. In some embodiments, the monomers of polyether polymer are composed of a cyclic ether compound and one or more monomers optionally selected from anhydrides, cyclic anhydrides, cyclic esters, carbon dioxide, polyols and polycarboxylic acids. In some embodiments, the monomers of polyether polymers are composed of a cyclic ether compound and one or more monomers optionally selected from anhydrides, cyclic anhydrides, polyols and polycarboxylic acids. Examples of polyether polymers include, but are not limited to, polyether polyesters, polyether polyols, etc.

Herein, an anhydride refers to a compound formed by dehydration condensation of carboxyl groups between multiple (e.g., two) carboxylic acid molecules into anhydride groups. Herein, multiple refers to two or more, such as two, three, four, five, six. An anhydride may be C2-C10 anhydride, such as C2 anhydride, C3 anhydride, C4 anhydride, C5 anhydride, C6 anhydride, C7 anhydride, C8 anhydride, C9 anhydride, C10 anhydride. Available anhydrides include but are not limited to acetic anhydride, propionic anhydride, etc.

Herein, a cyclic anhydride refers to a compound formed by dehydration condensation of carboxyl groups in a single carboxylic acid molecule containing multiple (e.g., two) carboxyl groups into an anhydride group. A cyclic anhydride may be 4-8-membered cyclic anhydride, such as 4-membered cyclic anhydride, 5-membered cyclic anhydride, 6-membered cyclic anhydride, 7-membered cyclic anhydride, and 8-membered cyclic anhydride. Herein, n-membered cyclic compound means that the number of ring atoms of the cyclic compound is n.

Herein, a cyclic ester refers to a compound having an ester bond on the ring. A cyclic ester may be 4-8-membered cyclic ester, such as 4-membered cyclic ester, 5-membered cyclic ester, 6-membered cyclic ester, 7-membered cyclic ester, and 8-membered cyclic ester.

Herein, a polyol refers to an alcohol containing multiple hydroxyls, including but not limited to diols, triols, etc. An "n-ol" means that the alcohol contains n hydroxyl groups. A polyol may be C2-C10 polyol, such as C2 polyol, C3 polyol, C4 polyol, C5 polyol, C6 polyol, C7 polyol, C8 polyol, C9 polyol, and C10 polyol. Available polyols include but are not limited to ethylene glycol, propylene glycol, glycerol, etc.

Herein, a polycarboxylic acid refers to a carboxylic acid containing multiple carboxyl groups, including but not limited to dicarboxylic acids, tricarboxylic acids, etc. An "n-carboxylic acid" means that the carboxylic acid contains n carboxyl groups. A polycarboxylic acid may be C2-C10 polycarboxylic acid, such as C2 polycarboxylic acid, C3 polycarboxylic acid, C4 polycarboxylic acid, C5 polycarboxylic acid, C6 polycarboxylic acid, C7 polycarboxylic acid, C8 polycarboxylic acid, C9 polycarboxylic acid, and C10 polycarboxylic acid.

Since the composite catalyst of the present disclosure has suitable acidity, it can show excellent performance (higher conversion rate and narrower molecular weight distribution) in ring-opening polymerization reaction of the cyclic ether. Therefore, the composite catalyst has broad application prospects in the following application fields.
1. High-end fabrics: the composite catalyst of the present disclosure can be used for the ring-opening polymerization of cyclic ether compounds to produce polyether polyesters or polyether polyols. Such polymers have good elasticity and durability, making them suitable for the manufacture of high-end fabrics, such as high-elasticity fibers, high-strength fabrics, etc.
2. Medical care: polyether polyester materials are biocompatible and degradable, and are suitable for medical devices, medical dressings and other fields. The composite catalyst of the present disclosure can be used to synthesize polyether polyester materials to meet the requirements of material performance and quality in the field of medical care.
3. Functional coatings: polyether polyester materials have good adhesion, flexibility and wear resistance in coatings, and can be used in automotive paints, architectural coatings and other fields. The composite catalyst of the present disclosure can catalyze the polymerization reaction to obtain polyether polyester materials with narrow molecular weight distribution at a high conversion rate, which can improve the performance and quality of coatings.
4. Electronic materials: polyether polyester materials have good electrical insulation and heat resistance and can be used in fields such as encapsulation and insulation of electronic devices. The composite catalyst of the present disclosure can be used to catalyze the synthesis of polyether polyester materials with specific performance requirements to meet the needs of the electronic materials field.
5. Degradable materials: polyether polyester materials are degradable and can be used in the manufacture of environmentally friendly products, such as degradable plastics, degradable packaging materials, etc. The preparation method of the polyether polyester material catalyzed by the composite catalyst of the present disclosure is simple and efficient, which helps to improve the production efficiency and quality of polyether polyester degradable materials.

In summary, the composite catalyst of the present disclosure has broad application prospects in application fields such as high-end fabrics, medical care, functional coatings, electronic materials and degradable materials. As the market's requirements for product performance and quality increase, it is imperative to develop new catalytic systems, so the present disclosure has good technical application prospects and market demand.

The present disclosure further provides a method for preparing a polyether polyester by polymerizing a cyclic ether compound with an anhydride analog using the composite catalyst of the present disclosure. In the present disclosure, a polyether polyester refers to a polyether polymer whose monomers comprise a cyclic ether compound and an anhydride analog. In the method, the anhydride analog may be selected from one or more of C2-C 10 anhydride, 4-8-membered cyclic anhydride and C2-C10 polycarboxylic acid. The polycarboxylic acid can be an aliphatic polycarboxylic acid or an aromatic polycarboxylic acid. The polycarboxylic acid is preferably selected from a dicarboxylic acid and a tricarboxylic acid, such as oxalic acid, malonic acid, and phthalic acid. In some embodiments, the anhydride analog is acetic anhydride. A mass ratio of the cyclic ether compound to the anhydride analog may be 80-240:1, such as 100:1, 120:1, 130:1, 150:1, 180:1, 200:1, 220:1, preferably 100-200:1. In some embodiments, the monomer of the polyether polyester also comprises a polyol, such as a diol. A mass ratio of the polyol to the anhydride analog may be 80-240:1, for example, 100:1, 120:1, 130:1, 150:1, 180:1, 200:1, 220:1. In some embodiment, the monomer of the polyether polyester consist of a cyclic ether compound, an anhydride analog, and optionally a polyol. An amount of the composite catalyst of the present disclosure may be 0.001-0.1wt% of the cyclic ether compound, for example 0.005wt%, 0.008wt%, 0.01wt%, 0.02wt%, 0.03wt%, 0.04wt%, 0.05wt%, 0.06wt%, 0.07wt%, 0.08wt%, 0.09wt%, preferably 0.01-0.02wt%. A reaction pressure may be ≤1MPaG, for example, ≤0.2MPaG, ≤0.4MPaG, ≤0.6MPaG, ≤0.8MPaG. A reaction temperature may be 50-120°C, for example, 60°C, 70°C, 80°C, 90°C, 100°C, 110°C, preferably 60-100°C. A reaction time may be 2-48 h, for example, 3 h, 5 h, 8 h, 12 h, 15 h, 18 h, 24 h, 30 h, 36 h. A number-average molecular weight of the polyether polyester prepared by the method of the present disclosure ranges from 450 to 10000, preferably from 1600 to 1700. A molecular weight distribution index of the polyether polyester prepared by the method of the present disclosure is 1.60-2.00, preferably 1.60-1.90, 1.70-1.90. In some embodiments, the molecular weight distribution index of the polyether polyester prepared by the method of the present disclosure is 1.75-1.88. In some embodiments, the molecular weight distribution index of the polyether polyester prepared by the method of the present disclosure is 1.65-1.88.

The present disclosure further provides a method for preparing a polyether polyol by polymerizing a cyclic ether compound with a polyol using the composite catalyst of the present disclosure. In the present disclosure, a polyether polyol refers to a polyether polymer whose monomers comprise a cyclic ether compound and a polyol, and the monomers of the polyether polyol do not comprise anhydride analogs. In some embodiments, the monomer of the polyether polyol consist of a cyclic ether compound and a polyol. Herein, the polyol may have 2, 3, 4, 5 or 6 hydroxyl groups. The polyol may be selected from C2-C20 polyol, C2-C10 polyol, C2-C6 polyol, C2-C4 polyol. In some embodiments, the polyol is selected from one or more of ethylene glycol, propylene glycol and glycerol. A mass ratio of the cyclic ether compound to the polyol may be 80-240:1, for example, 100:1, 120:1, 130:1, 150:1, 180:1, 200:1, 220:1, preferably 100-200:1. An amount of the composite catalyst of the present disclosure may be 0.001-0.1wt% of the cyclic ether compound, for example 0.005wt%, 0.008wt%, 0.01wt%, 0.02wt%, 0.03wt%, 0.04wt%, 0.05wt%, 0.06wt%, 0.07wt%, 0.08wt%, 0.09wt%, preferably 0.01-0.05wt%, 0.02-0.03wt%. A reaction pressure may be ≤1MPaG, for example, ≤0.2MPaG, ≤0.4MPaG, ≤0.6MPaG, ≤0.8MPaG. A reaction temperature may be 50-120°C, for example, 60°C, 70°C, 80°C, 90°C, 100°C, 110°C, preferably 60-100°C. A reaction time may be 2-48 h, for example, 3 h, 5 h, 8 h, 12 h, 15 h, 18 h, 24 h, 30 h, 36 h. A number-average molecular weight of the polyether polyol prepared by the method of the present disclosure ranges from 450 to 10000, preferably from 1000 to 1500, more preferably from 1100 to 1300. A molecular weight distribution index of the polyether polyol preparde by the method of the present disclosure is 2.00-2.35 or 1.50-2.00, for example, 1.60-2.00, 1.70-2.00, 1.80-2.00, 1.82-2.00, 1.82-1.92. In some embodiments, the molecular weight distribution index of the polyether polyol prepared by the method of the present disclosure is 2.10-2.30.

The present disclosure is further elaborated below in conjunction with specific examples. It should be understood that these examples are only used to illustrate the present disclosure and are not intended to limit the scope of the present disclosure. The experimental methods in the following examples without specifying specific conditions are usually based on conventional conditions or the conditions recommended by the manufacturer. Unless otherwise stated, percentages and parts are calculated by weight.

### Example 1

Preparation of Al-Si composite catalyst. 21.30 g of aluminum nitrate powder is dissolved in 500mL of ethanol-water mixed solvent (the volume ratio of ethanol to water is 4:1), then added to the reactor and stirred thoroughly. Subsequently, 88.64mL of tetraethyl orthosilicate is added, and the reaction is carried out at a constant temperature of 60°C for 24 hours, and then allowed to stand for 24 hours. Nitrogen is used for gas extraction method. Nitrogen is introduced into the reactor at 20mL/hr for 2 hours to evaporate the liquid in the reactant. The reactant is transferred to an evaporating dish. The evaporating dish is placed in a preheated dryer at 120°C and dried for 3 hours. The dried solid is calcined at 900°C for 3 hours in an air atmosphere to obtain a composite catalyst powder with an Al/Si molar ratio of 1:4. It is formed by band extrusion. The specific surface area of the catalyst measured by BET method is 282m²/g. The acid amount on the surface of the catalyst is 0.53mg and the acidity of the composite catalyst is 0.026mmol/g measured by the ion exchange method.

### Example 2

Preparation of Ti-Si composite catalyst. 18.97g of titanium tetrachloride powder is dissolved in 500mL of ethanol-water mixed solvent (the volume ratio of ethanol to water is 4:1), then added to the reactor and stirred thoroughly. Subsequently, 88.64mL of tetraethyl orthosilicate is added, and the reaction is carried out at a constant temperature of 60°C for 24 hours, and then allowed to stand for 24 hours. Nitrogen is used for gas extraction method. Nitrogen is introduced into the reactor at 20mL/hr for 2 hours to evaporate the liquid in the reactant. The reactant is transferred to an evaporating dish. The evaporating dish is placed in a preheated dryer at 120°C and dried for 3 hours. The dried solid is calcined at 900°C for 3 hours in an air atmosphere to obtain a composite catalyst powder with a Ti/Si molar ratio of 1:4. It is formed by band extrusion. The specific surface area of the catalyst measured by BET method is 263m²/g. The acid amount on the surface of the catalyst is 0.48mg and the acidity of the composite catalyst is 0.036mmol/g measured by the ion exchange method.

### Example 3

Preparation of Zr-Si composite catalyst. 23.12g of zirconium oxynitrate powder is dissolved in 500mL of ethanol-water mixed solvent (the volume ratio of ethanol to water is 4:1), then added to the reactor and stirred thoroughly. Subsequently, 88.64mL of tetraethyl orthosilicate is added, and the reaction is carried out at a constant temperature of 60°C for 24 hours, and then allowed to stand for 24 hours. After the reactants are centrifuged, the sediment is transferred to an evaporating dish. The evaporating dish is placed in a preheated dryer at 120°C and dried for 3 hours. The dried solid is calcined at 900°C for 3 hours in an air atmosphere to obtain a composite catalyst powder with a Zr/Si molar ratio of 1:4. It is formed by band extrusion. The specific surface area of the catalyst measured by BET method is 327m²/g. The acid amount on the surface of the catalyst is 0.55mg and the acidity of the composite catalyst is 0.046mmol/g measured by the ion exchange method.

### Comparative Example 1

Comparative catalyst D1 is a Ti-Si composite catalyst prepared by impregnation method. The Ti/Si molar ratio is 1:4. The specific surface area of catalyst D1 measured by BET method is 280m²/g. The acidity of the catalyst is 0.01mmol/g measured by the ion exchange method. The catalyst is dried in a dryer at 120°C for 3 hours, and the dried solid is calcined at 900°C for 3 hours in an air atmosphere.

### Comparative Example 2

Zeolite molecular sieve is a typical high aluminum-silicon ratio composite compound with both Bronsted and Lewis acid sites, which is widely used in the petrochemical field. Comparative catalyst D2 is ZSM-5 (Al:Si molar ratio of 1:50) prepared by NKC's direct synthesis method. The specific surface area of the catalyst measured by BET method is 340m²/g. The acidity of the catalyst is 0.3mmol/g measured by the ion exchange method. The catalyst is dried in a dryer at 120°C for 3 hours, and the dried solid is calcined at 900°C for 3 hours in an air atmosphere.

### Comparative Example 3

Comparative catalyst D3 is SiO₂ (Q-10) purchased from Fuji Corporation. The specific surface area of catalyst D3 measured by BET method is 290m²/g, with a particle size of 4mm. The acidity of the catalyst is 0.01mmol/g measured by the ion exchange method. The catalyst is dried in a dryer at 120°C for 3 hours, and the dried solid is calcined at 900°C for 3 hours in an air atmosphere.

### Comparative Example 4

The method of Example 3 is repeated, except that the amount of zirconium oxynitrate powder used is 26.7g, and the amount of tetraethyl orthosilicate used is 22.16mL, to obtain a composite catalyst powder with a Zr/Si molar ratio of 1:1. It is formed by band extrusion. The specific surface area of the catalyst measured by BET method is 132m²/g. The surface acidity of the catalyst is 0.052mmol/g measured by the ion exchange method.

### Comparative Example 5

The method of Example 3 is repeated, except that the amount of zirconium oxynitrate powder used is 26.7g, and the amount of tetraethyl orthosilicate used is 44.32mL, to obtain a composite catalyst powder with a Zr/Si molar ratio of 1:2. It is formed by band extrusion. The specific surface area of the catalyst measured by BET method is 146m²/g. The surface acidity of the catalyst is 0.048mmol/g measured by the ion exchange method.

### Application Example 1

20mg of the catalyst prepared in Examples 1, 2, 3 and Comparative Examples 1, 2, 3, 4, and 5 are respectively loaded into a 100mL stainless steel reactor. 80g of ethylene oxide and 0.8g of ethylene glycol are added in a mass ratio of 100: 1. The reactor is sealed and purged with nitrogen 5 times, the nitrogen maintains the pressure in the reactor ≤0.4MPaG, and the reaction is carried out at a constant temperature of 80°C for 8 hours with a stirring speed of 300rpm. The conversion rate, number-average molecular weight and molecular weight distribution index for each reaction are shown in Table 1.

**Table 1**

| Catalyst | Exampl e 1(Al-Si compos ite catalyst ) | Exampl e 2(Ti-Si compos ite catalyst ) | Exampl e 3(Zr-Si compos ite catalyst ) | Comparat ive catalyst D1 | Comparat ive catalyst D2 | Comparat ive catalyst D3 | Comparat ive catalyst D4 | Comparat ive catalyst D5 |
|---|---|---|---|---|---|---|---|---|
| Conversio n rate | 55% | 56% | 62% | 6% | 43% | 0 | 22% | 28% |
| Saponifica tion Number mgKOH/g | 99.8 | 99.1 | 89.8 | 159.6 | 81.3 | | 116.5 | 113.6 |
| Number-average molecular weight g/mol | 1124 | 1132 | 1249 | 703 | 1380 | - | 963 | 988 |
| Molecular weight distributio n index | 1.92 | 1.88 | 1.82 | The amount is too small to be analyzed. | 2.4 | - | 2.23 | 2.26 |

### Application Example 2

20mg of the catalyst prepared in Examples 1, 2, 3 and Comparative Examples 1, 2, 3, 4, and 5 are respectively loaded into a 100mL stainless steel reactor. 160g of tetrahydrofuran (THF), 80g of propylene oxide, and 1.6g of acetic anhydride are added in a mass ratio of 100:50:1. The reactor is sealed and purged with nitrogen 5 times, the nitrogen maintains the pressure in the reactor ≤0.4MPaG, and the reaction is carried out at a constant temperature of 80°C for 8 hours with a stirring speed of 300rpm. The conversion rate, number-average molecular weight and molecular weight distribution index for each reaction are shown in Table 2.

**Table 2**

| Catalyst | Exampl e 1(Al-Si compos ite catalyst ) | Exampl e 2(Ti-Si compos ite catalyst ) | Exampl e 3(Zr-Si compos ite catalyst ) | Comparat ive catalyst D1 | Comparat ive catalyst D2 | Comparat ive catalyst D3 | Comparat ive catalyst D4 | Comparat ive catalyst D5 |
|---|---|---|---|---|---|---|---|---|
| Conversio n rate | 56% | 58% | 66% | 25% | 48% | 0 | 26% | 31% |
| Saponifica tion Number mgKOH/g | 67.2 | 68.5 | 69.8 | 51.8 | 62.9 | | 58.1 | 60.2 |
| Number-average molecular weight g/mol | 1670 | 1638 | 1608 | 2166 | 1784 | - | 1932 | 1865 |
| Molecular weight distributio n index | 1.86 | 1.88 | 1.65 | 2.64 | 2.52 | - | 2.72 | 2.66 |

### Application Example 3

The mixture of the reaction solution and the catalyst from the above Application Examples 1 and 2 was taken, and the initial color number of the reaction solution is measured. The corresponding reaction conditions are maintained, and the conversion rate and color number are analyzed every 4 hours until the conversion rate stabilized (fluctuations below 0.1%), at which point the reaction is considered to have reached equilibrium, and the equilibrium conversion rate is recorded. After maintaining the same reaction conditions and continuing to run for 60 days, the conversion rate and color number of the reactants are analyzed, and the final color number is measured. The results are shown in Table 3.

**Table 3**

| Catalyst | Application Example 1 | | | | Application Example 2 | | | |
|---|---|---|---|---|---|---|---|---|
| | Time to reach equilibriu m (hr) | Equilibriu m conversion rate (%) | Color number of the reaction solution | | Time to reach equilibriu m (hr) | Equilibriu m conversion rate (%) | Color number of the reaction solution | |
| | | | Initia l | Fina l | | | Initia l | Final |
| Example 1(Al-Si composite catalyst) | 60 | 55.8 | 28 | 54 | 52 | 57.1 | 34 | 62 |
| Example 2(Ti-Si composite catalyst) | 56 | 59.2 | 24 | 52 | 48 | 60.2 | 30 | 58 |
| Example 3(Zr-Si composite catalyst) | 48 | 62.4 | 22 | 47 | 32 | 68.5 | 26 | 40 |
| Comparativ e catalyst D1 | 8 | 6.2 | 26 | 30 | 56 | 26.3 | 34 | 90 |
| Comparativ e catalyst | 64 | 45.2 | 38 | 79 | 60 | 48.8 | 36 | 110 |
| D2 | | | | | | | | |
| Comparativ e catalyst D3 | - | 0 | - | - | - | 0 | - | - |
| Comparativ e catalyst D4 | 12 | 22.6 | 23 | 42 | 52 | 28.1 | 26 | After 120 hours, severe catalyst powderin g is observed, and the catalyst is dark gray. |
| Comparativ e catalyst D5 | 12 | 32.3 | 24 | 50 | 58 | 32.3 | 24 | After 120 hours, severe catalyst powderin g is observed, and the catalyst is dark gray. |

Calculation of conversion rate = polymer mass in product/total mass of raw materials × 100%;

Among them, the polymer mass is the weight of the polymer obtained after rotary evaporation at -80kPaG and 130°C. The rotary evaporator is Buchi Rotavapor R215, and the vacuum pump is VACUUBRAND GMBH +CO KG MD 1C +AK +EK.

Herein, the determination of the number-average molecular weight (abbreviated as MW_{average}, unit: g/mol) of polyether polyesters requires the addition of excess KOH for saponification reaction firsly, and then acid titrating of the remaining alkali to obtain the saponification number (abbreviated as SN, unit: mgKOH/g). The saponification number is the equivalent KOH consumed in the saponification reaction of 1g of sample. The saponification number is determined according to the ASTM D94-07 (2017) method, and then the number-average molecular weight is calculated according to the following formula: MW_{average}=56105×2/SN.

Herein, the determination of the number-average molecular weight (abbreviated as MW_{average}, unit: g/mol) of polyether polyols requires the addition of excess acetic anhydride to convert the hydroxyl groups of the sample into ester groups by esterification, and then the unreacted acetic anhydride is fully hydrolyzed and then titrated with alkali to obtain the hydroxyl number (abbreviated as HN, unit: mgKOH/g). The hydroxyl number is determined according to ASTM D4274-05 (2010) method. And then the number-average molecular weight is calculated according to the following formula: MW_{average}=56105×2/HN.

Herein, the titrator is the automatic potentiometer T7 from METTLER TOLEDO.

The molecular weight distribution index is determined by Agilent 1260 Infinity II gel permeation chromatography (GPC) with THF as the mobile phase.

The color number is determined by British Lovibond automatic colorimeter PFX195, and the color number is based on the platinum-cobalt standard of ASTM D1209.

The polymerization of cyclic ethers is carried out in a fully automated laboratory reactor RC1 from METTLER TOLEDO.

Comparing Example 2 with Comparative Example 1, the acidity of the catalyst D1 prepared in Comparative Example 1 is lower due to the difference in the preparation method. When catalyst D1 is used to catalyze the ring-opening polymerization of cyclic ether compounds, as shown in Tables 1 and 2, the conversion rate and molecular weight distribution of the polymerized product measured are both poor. Catalyst D2 obtained in Comparative Example 2 has a high specific surface area and acidity. When catalyst D2 is used to catalyze the ring-opening polymerization of cyclic ether compounds, although the conversion rate is high, the molecular weight distribution of the polymerization product is relatively wide because the preparation method of the catalyst D2 is different from that of the present disclosure. Catalyst D3 obtained in Comparative Example 3 cannot catalyze the ring-opening polymerization of cyclic ether compounds.

In Application Example 3, the time required to reach reaction equilibrium and the color number after prolonged operation are tested for Application Examples 1 and 2. By comparison, it is found that the time for the reaction system using the composite catalyst of the present disclosure to reach equilibrium is shorter than that for the reaction system using the comparative catalyst. Among them, the composite catalyst prepared in Example 3 has higher activity. The composite catalyst prepared in Example 3 can make the reaction system reach reaction equilibrium in the shortest time with the highest equilibrium conversion rate. Furthermore, after 60 days of continuous operation, the color number of the reaction solution is still maintained at a relatively low level. The reaction system using comparative catalyst D1 in Application Example 1 has a short time to reach equilibrium and a low final color number of the reaction solution, which is caused by the low conversion rate of the reaction.

As shown in Table 1, when catalysts D4 and D5 are applied to catalyze the polymerization of ethylene oxide and ethylene glycol, the conversion rate of the polymerization reaction is low, at 22% and 28% respectively; the molecular weight distribution index of the polymerization product is high, at 2.23 and 2.26 respectively. As shown in Table 2, when catalysts D4 and D5 are used to catalyze the polymerization of tetrahydrofuran, propylene oxide and acetic anhydride, the conversion rate of the polymerization reaction is low, at 26% and 31% respectively; the molecular weight distribution index of the polymerization product is high, at 2.72 and 2.66 respectively. It can be seen that when the molar ratio of metal ions to silicon atoms in the preparation method is changed, although the content of metal (Zr) in the prepared catalyst is increased, the catalytic performance of the catalyst is reduced, which is specifically reflected in both reduced conversion rates of catalytic reaction and broader molecular weight distributions of the polymerization product. This shows that the polymerization products prepared using catalysts D4 and D5 are unsuitable for industrial application.

As shown in Table 3, when catalysts D4 and D5 are applied to Application Example 1, even though the equilibrium conversion rate is very low, the color number still rises to a level comparable to that of Examples 1-3. When catalysts D4 and D5 are applied to Application Example 2, after continuous production for 120 hours, severe powdering of catalysts D4 and D5 was noted, resulting in turbidity in the reaction solution, which cannot meet the requirements of long-term operation.

In summary, the present disclosure provides a composite catalyst, which exhibits excellent performance in ring-opening polymerization reaction of a cyclic ether. The composite catalyst has suitable acidity, and its preparation method is simple, and is suitable for synthesizing polyether polyester materials or polyether polyol materials with different number-average molecular weights and performance characteristics. Using the composite catalyst of the present disclosure to catalyze the ring-opening polymerization reaction of cyclic ethers can make the reaction system reach equilibrium in a relatively short time, and after the reaction system reaches equilibrium, the reaction solution can still be kept at a relatively low color number level after a long reaction time. Example 1, Example 2 and Example 3 provide specific preparation methods for reference and practical application.

## Claims

1. A preparation method for a composite catalyst for catalyzing polymerization of a cyclic ether, wherein the preparation method comprises the following steps:
(1) dissolving a metal salt in a solvent, stirring evenly to obtain a first component;
(2) adding a silicon source to the first component, reacting the silicon source and the metal salt, and standing;
(3) removing the solvent, drying, to obtain a dried powder;
(4) calcining the dried powder to obtain the composite catalyst;
a metal element in the metal salt is selected from one or more of Al, Zn, Sn, Fe, Ti, Zr and Hf;
a molar ratio of metal ions comprised in the metal salt to silicon atoms comprised in the silicon source is 1: (3-10).

2. The preparation method for the composite catalyst for catalyzing polymerization of a cyclic ether according to claim 1, wherein in step (1),
the metal element in the metal salt is selected from one or more of Al, Ti and Zr;
an anion in the metal salt is selected from one or more of a halide ion, a nitrate ion, a sulfate ion, an oxide ion, a carboxylate ion and an alkoxide ion;
the silicon source is selected from one or more of tetraethyl orthosilicate, tetramethyl orthosilicate, polysilane and tetrachlorosilane;
the solvent is an organic solvent and/or water;
the metal salt is selected from one or more of zirconium oxynitrate, titanium tetrachloride and aluminum nitrate.

3. The preparation method for the composite catalyst for catalyzing polymerization of a cyclic ether according to claim 1, wherein the step (2) has one or more of the following characteristics:
a reaction is carried out for 4-48 hours;
a reaction is carried out at 40-80°C;
a time of standing is 12-48 hours;
a concentration of the metal salt in the solvent is 0.05-1 mol/L;
a concentration of the silicon source in the solvent is 0.2-4 mol/L.

4. The preparation method for the composite catalyst for catalyzing polymerization of a cyclic ether according to claim 1, wherein the step (3) has one or more of the following characteristics:
the solvent is removed by centrifugation or gas extraction method to obtain insoluble matter, and the insoluble matter is dried;
a temperature of drying is 30-200°C;
a time of drying is 1-12 hours.

5. The preparation method for the composite catalyst for catalyzing polymerization of a cyclic ether according to claim 1, wherein in step (4),
a temperature of calcination is 400-1500°C; and/or,
a time of calcination is 1-12 hours.

6. The preparation method for the composite catalyst for catalyzing polymerization of a cyclic ether according to claim 1, wherein the preparation method further comprises the step of: (5) extruding and granulating the composite catalyst.

7. A composite catalyst prepared by the preparation method for the composite catalyst for catalyzing polymerization of a cyclic ether according to any one of claims 1 to 6.

8. The composite catalyst according to claim 7, wherein the composite catalyst has one or more of the following characteristics:
a specific surface area of the composite catalyst is ≥250m²/g;
an acidity of the composite catalyst is 0.02-0.2mmol/g;
an acid amount on the surface of the composite catalyst is 0.40-0.70mg;
a molar ratio of silicon element to the metal element is (3-10):1 in the composite catalyst.

9. A method for preparing a polyether polymer by ring-opening polymerization of a cyclic ether compound, wherein the composite catalyst according to claim 7 or 8 is used to catalyze the ring-opening polymerization of the cyclic ether compound.

10. The method according to claim 9, wherein the method comprises: using the composite catalyst to catalyze the polymerization of a cyclic ether compound with an anhydride analog to produce a polyether polyester or to catalyze the polymerization of a cyclic ether compound with a polyol to produce a polyether polyol, wherein the cyclic ether compound is selected from one or more of ethylene oxide, propylene oxide, tetrahydrofuran and hexamethylene oxide;
preferably, the anhydride analog is selected from one or more of C2-C10 anhydride, 4-8-membered cyclic anhydride and C2-C10 polycarboxylic acid, and the C2-C10 polycarboxylic acid is selected from one or more of a dicarboxylic acid and a tricarboxylic acid;
preferably, the polyol is a C2-C6 polyol, and the polyol has 2, 3, 4, 5 or 6 hydroxyl groups.

11. The method according to claim 10, wherein a mass ratio of the cyclic ether compound to the anhydride analog is 100-200:1 in the method of catalyzing the polymerization of the cyclic ether compound with the anhydride analog to produce the polyether polyester by the composite catalyst.

12. The method according to claim 10, wherein an amount of the composite catalyst is 0.001-0.1wt% of the cyclic ether compound in the method of catalyzing the polymerization of the cyclic ether compound with the anhydride analog to produce the polyether polyester by the composite catalyst.

13. The method according to claim 10, wherein a mass ratio of the cyclic ether compound to the polyol is 100-200:1 in the method of catalyzing the polymerization of the cyclic ether compound with the polyol to produce the polyether polyol by the composite catalyst.

14. The method according to claim 10, wherein an amount of the composite catalyst is 0.01-0.05wt% of the cyclic ether compound in the method of catalyzing the polymerization of the cyclic ether compound with the polyol to produce the polyether polyol by the composite catalyst.

15. The method according to claim 10, wherein a reaction pressure is ≤1MPaG, and/or a reaction temperature is 50-120°C.
